# EUROPÄISCHE PATENTSCHRIFT

(11) **EP 2 046 471 B1**
(45) Veröffentlichungstag und Bekanntmachung des Hinweises auf die Patenterteilung: **30.06.2010**
(21) Anmeldenummer: 07726166.7
(22) Anmeldetag: 27.06.2007
(51) Int. Cl.: B01D 29/11, B01D 35/027

(54) **FILTERSYSTEM**
FILTER SYSTEM
SYSTÈME DE FILTRAGE

(30) Priorität: 28.07.2006 DE 102006034942
(43) Veröffentlichungstag der Anmeldung: 15.04.2009
(73) Patentinhaber: Hydac Process Technology GmbH, 66538 Neunkirchen (DE)
(72) Erfinder: THEIS, Dieter, 66399 Mandelbachtal (DE); SCHNEIDER, Thomas, 66299 Friedrichsthal (DE); WNUK, Ralf, 66450 Bexbach/Kleinottweiler (DE)
(74) Vertreter: Bartels, Martin Erich Arthur
(86) Internationale Anmeldenummer: PCT/EP2007/005670
(87) Internationale Veröffentlichungsnummer: WO 2008/011947

(56) Entgegenhaltungen:
- DE-B3-102004 001 760
- JP-A- 2 187 189

## Beschreibung

Die Erfindung betrifft ein Filtersystem mit zumindest einem Filterelement, das für den Einsatz bei Anlagen vorgesehen ist, bei denen Fluide anfallen, die in ein betreffendes Gewässer einzuleiten sind und wobei aus Gründen des Gewässerschutzes vor dem Einleiten ein Abreinigen der Fluide erforderlich ist gemäß der Merkmalsausgestaltung des Oberbegriffes des Patentanspruches 1. Die hierfür erforderlichen Maßnahmen gestalten sich oftmals schwierig und kostspielig, insbesondere, wenn große Mengen an Fluiden anfallen, die bei ungereinigter Einleitung eine Verschmutzung betreffender Gewässer verursachen könnten.

Ein diesbezügliches Problem tritt in ausgeprägtem Maße beim Betrieb von Off-Shore-Anlagen, beispielsweise Bohrplattformen für Öl- und Gasgewinnung, auf. Größere Mengen an Seewasser werden bei solchen Anlagen als Spül- und/oder Kühlflüssigkeit oder für andere Betriebszwecke benutzt und anschließend wieder in die See eingeleitet. Hierbei ist es Stand der Technik, Filtersysteme auf den betreffenden Bohrplattformen einzurichten. Wegen der räumlichen Enge der Bohrplattformen führt der Platzbedarf für derartige Filtersysteme zu einer sowohl betrieblich als auch wirtschaftlich ungünstigen Verringerung des für die eigentliche Rohrstoffgewinnung zur Verfügung stehenden Arbeitsraumes der Plattformen.

Durch die DE 10 2004 001 760 B3 ist ein gattungsgemäßes Filtersystem mit zumindest einem Filterelement bekannt, das der Aufbereitung von Regenwasser für die weitere Verwendung in einer Hausversorgungsanlage dient. Des weiteren schlägt die bekannte Lösung ein Verfahren zur Benutzung des Filtersystems vor, bei dem die Filterung des Regenwassers durch Ablagerung in ein unteres Sediment im Wesentlichen aus anorganischen Verunreinigungen, in ein oberes Sediment im Wesentlichen aus organischen Verunreinigungen und in ein mittleres Sediment im Wesentlichen aus anorganischen und organischen Verunreinigungen erfolgt und die organischen Verunreinigungen aus dem oberen Sediment und dem mittleren Sediment biologisch in wasserlösliche Stoffe zersetzt und diese Stoffe dem von den Verunreinigungen befreiten Regenwasser beigegeben werden. Eine entsprechende Regenwasseraufbereitungsanlage als Filtersystem besitzt daher einen biologischen Absetzfilter als Filterelement, der aus einem topfartigen Filtergehäuse mit einem Absetzraum für die verschiedenen Sedimente besteht, wobei der Absetzraum des Filtergehäuses einen Überlauf für das durch die Sedimentation gereinigte Regenwasser besitzt, das über eine entsprechende Perforation im Filtergehäuse im Wesentlichen in horizontaler Richtung das Gehäuse durchströmend das Filterelement verläßt. Für einen Einsatz im Rahmen von Off-Shore-Anlagen ist die bekannte Regenwasseraufbereitungslösung nicht geeignet.

Im Hinblick hierauf stellt sich die Erfindung die Aufgabe, ein Filtersystem zur Verfügung zu stellen, das, insbesondere bei einer Verwendung bei Off-Shore-Anlagen, sowohl betriebliche als auch wirtschaftliche Vorteile bietet.

Erfindungsgemäß ist diese Aufgabe durch ein Filtersystem gelöst, das die Merkmale des Patentanspruches 1 in seiner Gesamtheit aufweist.

Danach besteht eine wesentliche Besonderheit der Erfindung darin, dass es sich um ein Unterwassersystem handelt. Dadurch ist von vornherein vermieden, dass das Filtersystem den über der Wasseroberfläche vorhandenen Bauraum einer betreffenden Plattform verringert oder den Betriebsablauf behindert. Dadurch, dass das System auf den Gewässergrund abgesenkt ist, an dem die betreffende Bohrplattform verankert ist, können unmittelbar an einem betreffenden Bohrloch anfallende Fluide, wie Spülwassermengen, auf kurzem Wege in das Filtersystem eingeleitet werden und brauchen nicht zum Überwasserteil der betreffenden Plattform hoch gepumpt zu werden. Eine weitere besonders ins Gewicht fallende Verringerung der zum Betrieb des Filtersystems erforderlichen Energiemenge ergibt sich dadurch, dass erfindungsgemäß säulenartig gestaltete Filterelemente vorgesehen sind, die im Gewässer mit im wesentlich vertikal verlaufender Hochachse eingetaucht und an ihrer Außenseite von einem Mantel umgeben sind, der einen Strömungskanal für eine Vertikalströmung des das betreffende Filterelement umgebenden Gewässers bildet. Dadurch entsteht an der Außenseite des Filterelementes eine Sogwirkung, was wiederum zu einer Verringerung des Energiebedarfs für den Filtrationsvorgang führt.

Die erfindungsgemäße Anordnung ist dabei derart getroffen, dass die Gestalt des Mantels und seine Lagebeziehung zur Außenseite des jeweiligen Filterelementes derart gewählt sind, dass der Mantel die nach oben gerichtete Vertikalströmung des Gewässers im Strömungskanal begünstigt. Hierbei kann der Mantel eine Art Kamin bilden, durch dessen Wirkung das an der Außenseite des Filterelementes austretende, abgereinigte Fluid nach oben abgeführt wird, wodurch sich am Filterelement günstige Druckverhältnisse ergeben und der Filtrationsvorgang daher bei verringerter Druckdifferenz zwischen Schmutzseite und Reinseite erfolgen kann.

Eine besonders gute Kaminwirkung ergibt sich, wenn die Innenwand des Mantels von der Außenseite des Filterelementes einen Abstand besitzt, der sich über die Länge der Hochachse in der Weise verändert, dass sich der freie Querschnitt des Strömungskanales von einem Größtwert am unteren Eintrittsende des Strömungskanales bis zu einem Kleinstwert am oberen Austrittsende verringert. Da hierbei die Strömungsgeschwindigkeit im Strömungskanal nach oben hin zunimmt, ergibt sich über die Höhe des Filterelementes eine den Wirkungsgrad des Filtrationsvorganges begünstigende Änderung der statischen Druckverhältnisse.

Das erfindungsgemäße Filtersystem kann in der Weise gestaltet sein, dass das zumindest eine Filterelement mit seinem unteren Ende an einer Anschlussarmatur gelagert ist, die über eine steuerbare Absperreinrichtung mit einem das zu reinigende Fluid abgebenden Fluidanschluss verbunden ist.

Bei besonders vorteilhaften Ausführungsbeispielen ist die Anordnung so getroffen, dass vom Fluidanschluss mehrere Anschlussarmaturen für jeweilige Filterelemente abzweigen. Dadurch ergibt sich die Möglichkeit, je nach Menge des anfallenden, abzureinigenden Fluides eine entsprechend größere oder kleinere Anzahl von Filterelementen zu betreiben oder bei laufendem Betrieb betreffende verbrauchte (verschmutzte) Filterelemente auszutauschen, während andere Filterelemente weiter betrieben werden.

Wie bereits erwähnt, begünstigt eine entsprechend gewählte Gestaltung des Strömungskanals die Vertikalströmung am betreffenden Filterelement. Zu diesem Zweck kann die Anordnung so getroffen sein, dass der Mantel, ausgehend von seinem unteren Endbereich, der eine dem Schalltrichter einer Posaune nachempfundene glockenartige Gestalt besitzt, sich im wesentlichen mit konischer Verjüngung zu seinem oberen Ende hin erstreckt. Dadurch hat der Strömungskanal am unteren Eintrittsende einen großen Einlassquerschnitt in Gestalt eines Einlauftrichters, wobei der Mantel vorzugsweise mit seinem oberen Ende am oberen Ende des jeweiligen Filterelementes unter Freilassung eines Durchlasses für die Vertikalströmung so aufgehängt ist, dass der untere Endbereich des Mantels um eine Strecke gegenüber dem unteren Ende des Filterelementes nach oben versetzt ist. Diese Lageanordnung begünstigt das Einströmen des Gewässers vom unteren Ende des Filterelementes her in den Strömungskanal.

Als Fortsetzung des vom Mantel gebildeten Strömungskanales nach oben kann eine Hutze in der Art eines Kaminaufsatzes am oberen Ende des Mantels vorgesehen sein.

Als Alternative zur "Glockenbauweise", bei der jedes Filterelement von einem glockenartigen Mantel umgeben ist, kann das Filtersystem in "Kastenbauweise" verwirklicht sein. Dabei ist der Mantel durch Wandteile eines Kastens gebildet, der einen ein Teil des Fluidanschlusses bildenden Sammelraum enthält, von dem die zumindest eine Anschlussarmatur abzweigt.

Bei derartigen Ausführungsbeispielen ist die Anordnung vorzugsweise so getroffen, dass der Kasten einen im Umriß rechteckförmigen Unterkasten aufweist, längs dessen Seitenränder sich der Sammelraum erstreckt, und der eine vom Sammelraum umgebene Öffnung aufweist, über der ein den zumindest einen Strömungskanal für zumindest ein Filterelement bildender Oberkasten angebracht ist.

Um den Strömungsquerschnitt des jeweiligen Strömungskanales nach oben hin zu verringern, kann der Oberkasten zumindest eine Seitenwand aufweisen, die gegenüber der Hochachse eine Neigung besitzt, die den freien Querschnitt des jeweiligen Strömungskanales nach oben hin verringert.

Bei der "Kastenbauweise" kann der Oberkasten zwei sich entlang der langen Seiten des Unterkastens nebeneinander erstreckende Schächte aufweisen, wobei jedem Schacht zugeordnet mehrere Filterelemente in Reihe angeordnet sind, und wobei deren Strömungskanäle durch quer zu den Seitenwänden verlaufende Wände getrennt sind.

Als Filterelemente für das erfindungsgemäße Filtersystem haben sich Spaltsiebrohrfilterelemente als besonders geeignet erwiesen, wie sie durch die DE 197 11 589 A1 bekannt sind. Derartige Filterelemente sind sowohl in zylindrischer als auch in konischer Form auf dem Markt erhältlich. In Verbindung mit den bei der Erfindung vorgesehenen, sich nach oben hin verjüngenden Strömungskanälen, sind für das erfindungsgemäße Filtersystem konische Spaltsiebrohrfilterelemente besonders geeignet, die sich, ausgehend vom unteren Einlassende, nach oben hin leicht konisch verjüngen.

Gegenstand der Erfindung ist auch eine für das erfindungsgemäße Filtersystem vorgesehene Filtereinheit, die die Merkmale des Patentanspruches 15 aufweist.

Nachstehend ist die Erfindung anhand von in der Zeichnung dargestellten Ausführungsbeispielen im Einzelnen erläutert. Es zeigen:
- Fig. 1 eine stark schematisch vereinfacht und, was die Anzahl der gezeigten Filterelement betrifft, unvollständig gezeichnete Seitenansicht eines Ausführungsbeispieles des erfindungsgemäßen Filtersystemes mit acht je eigens ummantelten Filterelementen;
- Fig. 2 eine Draufsicht auf Fig. 1, wobei sämtliche Filterelemente sichtbar sind;
- Fig. 3 einen gegenüber Fig. 1 und 2 stark vergrößert gezeichneten Vertikalschnitt eines der ummantelten Filterelemente des Ausführungsbeispieles;
- Fig. 4 eine stark schematisch vereinfacht gezeichnete perspektivische Schrägansicht eines zweiten Ausführungsbeispieles des erfindungsgemäßen Filtersystemes;
- Fig. 5 einen stark schematisch vereinfachten Querschnitt des Ausführungsbeispiels von Fig. 4 und
- Fig. 6 einen gegenüber Fig. 5 in etwa vierfacher Vergrößerung gezeichneten Teilquerschnitt des in Fig. 5 mit VI bezeichneten Bezirks.

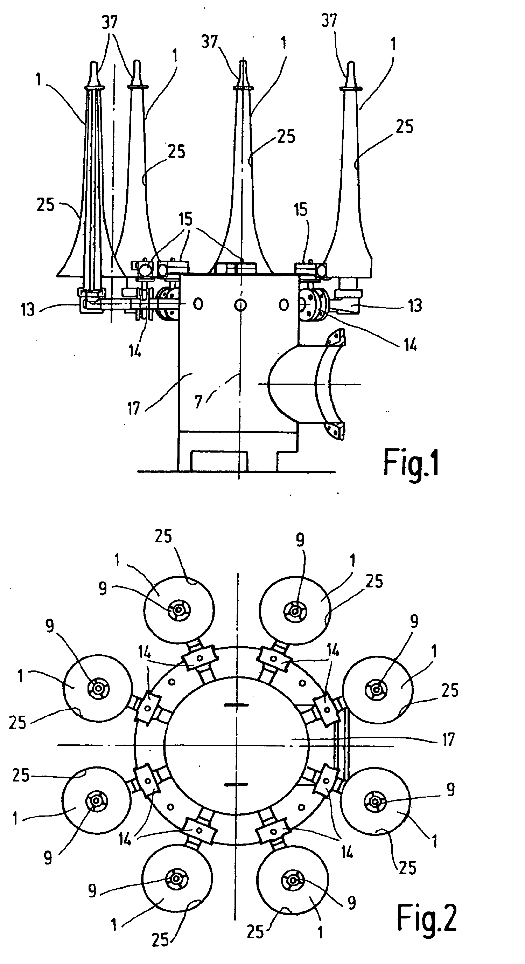

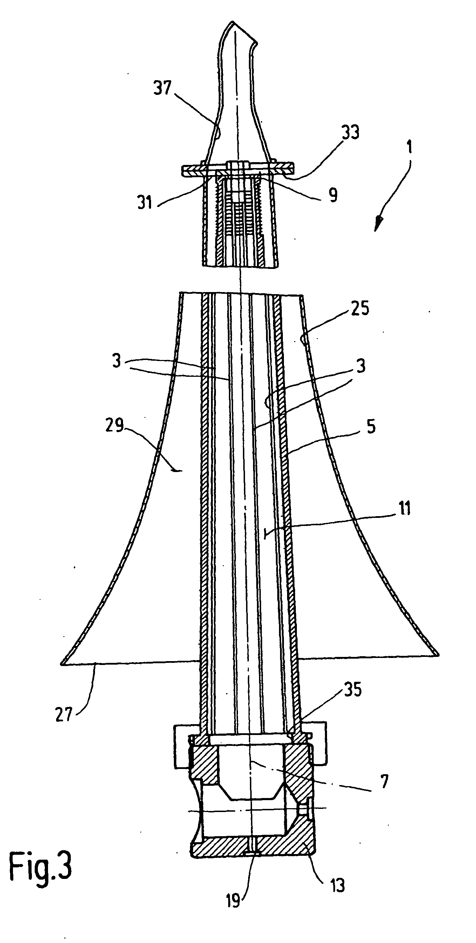

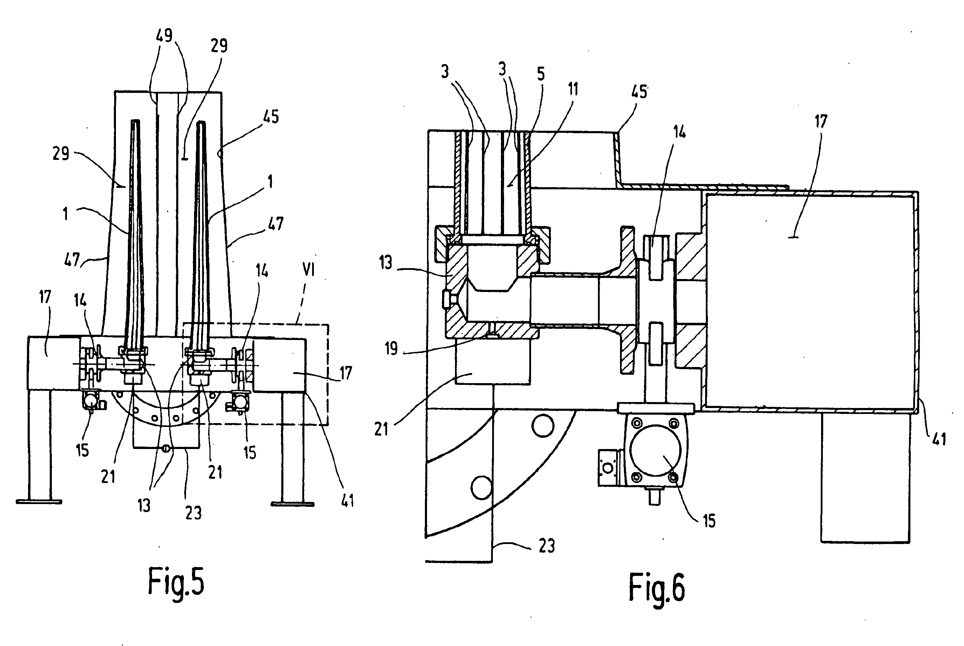

Fig. 1 bis 3 zeigen ein erstes Ausführungsbeispiel des Filtersystems mit acht vereinzelt stehenden, jeweils für sich ummantelten Filterelementen 1, von denen eines in Fig. 3 gesondert dargestellt ist. Bei den Filterelementen 1 handelt es sich um Spaltsiebrohrfilterelemente leicht konischer Bauart, wobei Stützstäbe 3 mit einer oder mehreren Lagen mindestens eines Drahtprofiles 5 so umwickelt sind, dass Spalte gebildet werden, die durch ein Fluid passierbar sind. Das, ebenso wie die Stützstäbe 3 aus Edelstahl gebildete Drahtprofil 5 ist zumindest teilweise mit den Stützstäben 3 fest verbunden, beispielsweise durch Schweißen. Bei der vorliegenden, leicht konischen Bauweise verlaufen die Stützstäbe 3 zur Hochachse 7 leicht geneigt zu einem oberen Abschlußdeckel 9, der den inneren Fluidraum 11 am oberen Ende verschließt. Für den Zufluß von abzureinigendem Fluid ist das untere, offene Ende des Filterelementes an einer Anschlußarmatur 13 angebracht. Über je eine Absperrschiebereinrichtung 14, die durch einen pneumatischen Antrieb 15 steuerbar ist, ist jede Anschlußarmatur 13 mit einem Fluidsammelraum 17 in Verbindung, aus dem bei geöffneter Schiebereinrichtung 14 das abzureinigende Fluid dem jeweiligen Filterelement 1 zugeführt wird. Jede Anschlußarmatur 13 weist, wie aus Fig. 3 deutlich ersichtlich ist, einen Drucklufteinlaß 19 auf. Fig. 5 und 6, auf die bei der Beschreibung des zweiten Ausführungsbeispieles noch eingegangen wird, zeigen (siehe insbesondere Fig. 6), dass den Einlässen 19 an den Anschlußarmaturen 13 ein Magnetventil 21 vorgeschaltet ist, über das von einer Druckluftleitung 23 her Druckluft in den Fluidraum 11 einblasbar ist.

Wie bereits erwähnt, weist bei dem Ausführungsbeispiel von Fig. 1 bis 3 jedes Filterelement 1 einen eigenen Mantel 25 auf. Wie am besten aus Fig. 3 zu ersehen ist, hat der Mantel 25, der einstückig aus Edelstahl geformt ist, eine gestreckte glockenartige Form wobei am unteren Ende 27 (Fig. 3) ein Einlauftrichter, der in der Art des Schalltrichters einer Posaune geformt ist, gebildet ist. Dieser Einlauftrichter bildet den Anfang für einen Strömungskanal 29 für eine nach oben gerichtete Vertikalströmung des Gewässers, in das das Filtersystem eingetaucht ist. Wie ebenfalls aus Fig. 3 deutlich zu ersehen ist, erstreckt sich der Mantel 25 in einem solchen Abstand von der Außenseite des Spaltsiebrohrfilterelementes, dass sich der lichte Strömungsquerschnitt des gebildeten Strömungskanales 29 (Fig. 3) zum oberen Ende 31 hin verringert. An diesem oberen Ende 31 sind Querträger 33 mit dem Abschlußdeckel 9 verschraubt, an denen der Mantel 25 so aufgehängt ist, dass sich sein unteres Ende 27 in einem Abstand oberhalb der Anschlußarmatur 13 befindet, der Einlaufbereich des Strömungskanales 29 also etwas oberhalb des unteren Endes 35 des Spaltsiebrohrfilterelementes beginnt. Mit den oberen Querträgern 33 ist eine Hutze 37 verbunden, die in der Art eines Kaminaufsatzes eine Fortsetzung des Strömungskanales 29 bildet. Das untere Ende 27 des Mantels 25 ist im Querschnitt gesehen mindestens dreimal so groß wie der Querschnitt des Filterelementes 1 an diester Stelle und von der Umgebung aus gesehen ist der Mantel 25 konvex ausgebildet mit zunehmender Krümmung in Richtung des unteren freien Endes 27. Am oberen Ende 31 ist der Mantel 25 im Querschnitt gesehen etwa 1,5 fach größer als der Querschnitt des Filterelementes 1 in diesem Bereich.

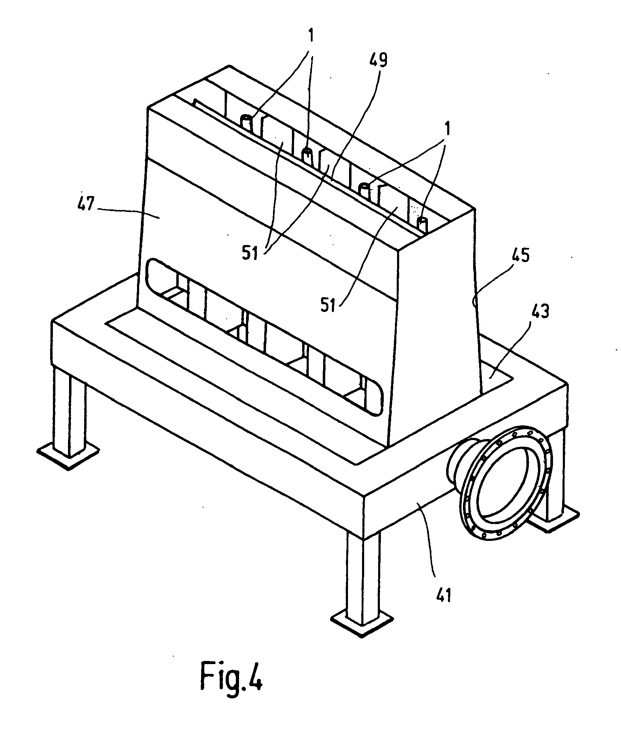

Das in Fig. 4 bis 6 gezeigte zweite Ausführungsbeispiel stellt im Unterschied zum erstbeschriebenen Beispiel eine Art Kastenbauweise dar, wobei ebenfalls acht Filterelemente vorgesehen sind, die jedoch nicht einzel stehend, sondern in zwei geraden Reihen, die zueinander parallel verlaufen, angeordnet sind. Bei diesem Ausführungsbeispiel ist ein Unterkasten 41 mit rechteckförmigem Umriß auf dem Gewässergrund aufgeständert. Der Unterkasten 41 bildet entlang seiner kurzen und langen Seiten den Sammelraum 17 für das abzureinigende Fluid. In dem vom Sammelraum 17 umgebenen Zentralbereich hat der Unterkasten 41 eine Öffnung 43 für den Eintritt des Gewässers, siehe Fig. 4. Oberhalb dieser Öffnung 43 befindet sich ein Oberkasten 45, dessen Wände die Strömungskanäle 29 (Fig. 5) für die Vertikalströmung längs der Spaltrohrsiebrohrfilterelemente begrenzen. Wie aus Fig. 4 und 5 zu ersehen ist, verlaufen die die Längsseiten des Oberkastens 45 bildenden Seitenwände 47 zur Vertikalen leicht geneigt, so dass, wie beim ersten Ausführungsbeispiel, sich der lichte Strömungsquerschnitt der Strömungskanäle 29 nach oben hin verringert. Wie erwähnt, sind die Filterelemente 1 in zwei parallelen Reihen angeordnet, die durch Trennwände 49 voneinander getrennt sind. Zwischen diesen und der benachbarten Seitenwand 47 verlaufende Querwände 51 trennen die Folge der Strömungskanäle 29 voneinander. Wie aus Fig. 5 und 6. erkennbar ist, zweigen Schiebereinrichtungen 14 und Anschlußarmaturen 13 der Filterelemente jeweils von den sich längs der Langseiten des Unterkastens 41 erstreckenden Bereichen des Sammelraumes 17 ab.

In entsprechender Weise wie bei dem erstbeschriebenen Beispiel des-Filtersystems können einzelne Filterelemente oder eine gewünschte Anzahl von Filterelementen in Betrieb sein, je nach anfallender Fluidmenge. Ebenso wie beim erstbeschriebenen Beispiel kann der Filtrationsvorgang sowie die Ausbildung der Vertikalströmung in den Strömungskanälen 29 durch Einblasen von Druckluft über die Einlaßöffnungen 19 an den Anschlußarmaturen 13 begünstigt werden. Das Betriebsverhalten sowohl des in "Kastenbauweise" ausgebildeten Beispiels als auch des in "Glockenbauweise" ausgebildeten Beispieles ist im wesentlichen gleichartig. Allerdings lassen sich bei der Bauweise von Fig. 1 bis 3 einzelne Filterelemente 1 als komplette Funktionseinheit, bestehend aus Spaltsiebrohrfilterelement mit glockenartigem Mantel und an dessen oberem Ende befindlicher Hutze, unter Wasser besonders einfach und bequem einzeln auswechseln, verglichen mit dem Ausführungsbeispiel von Fig. 4 bis 6, wo die Filterelemente innerhalb des Oberkastens 45 weniger leicht zugänglich sind.

## Patentansprüche

1. Filtersystem mit zumindest einem Filterelement (1), das unterhalb der Oberfläche eines Gewässers angeordnet ist, von einem abzureinigenden Fluid von seinem inneren Fluidraum (11) her zu seiner Außenseite hin durchströmbar und an seiner Außenseite von dem Gewässer umgeben ist, so dass an dieses das abgereinigte Fluid abgegeben wird, wobei das Filterelement (1) eine eine Hochachse (7) definierende säulenartige Gestalt aufweist, im Gewässer mit im wesentlichen vertikal verlaufender Hochachse (7) eingetaucht und an seiner Außenseite von einem Mantel (25) umgeben ist, **dadurch gekennzeichnet, dass** der Mantel (25) zwischen sich und der Außenseite des Filterelementes (1) einen Strömungskanal (29) für eine Vertikalströmung des Gewässers bildet, dass die Gestalt des Mantels (25) und seine Lagebeziehung zur Außenseite des jeweiligen Filterelementes (1) derart gewählt sind, dass der Mantel (25) die nach oben gerichtete Vertikalströmung des Gewässers im Strömungskanal (29) begünstigt, und dass hierfür die Innenwand des Mantels (25) von der Außenseite des Filterelementes (1) einen Abstand besitzt, der sich über die Länge der Hochachse (7) in der Weise verändert, dass sich der freie Querschnitt des Strömungskanals (29) von einem Größtwert am unteren Eintrittsende des Strömungskanals (29) bis zu einem Kleinstwert am oberen Austrittsende verringert.

2. Filtersystem nach Anspruch 1, **dadurch gekennzeichnet, dass** das zumindest eine Filterelement (1) mit seinem unteren Ende (35) an einer Anschlussarmatur (13) gelagert ist, die über eine steuerbare Absperreinrichtung (14) mit einem das zu reinigende Fluid abgebenden Fluidanschluss (17) verbunden ist.

3. Filtersystem nach Anspruch 2, **dadurch gekennzeichnet, dass** vom Fluidanschluss (17) mehrere Anschlussarmaturen (13) für die jeweiligen Filterelemente (1) abzweigen.

4. Filtersystem nach einem der Ansprüche 1 bis 3, **dadurch gekennzeichnet, dass** der Mantel (25), ausgehend von seinem unteren Endbereich (27), der eine dem Schalltrichter einer Posaune nachempfundene glokkenartige Gestalt besitzt, sich im wesentlichen mit konischer Verjüngung zu seinem oberen Ende hin erstreckt.

5. Filtersystem nach Anspruch 4, **dadurch gekennzeichnet, dass** der Mantel (25) mit seinem oberen Ende am oberen Ende (31) des jeweiligen Filterelementes (1) unter Freilassung eines Durchlasses für die Vertikalströmung so aufgehängt ist, dass der untere Endbereich (27) des Mantels (25) um eine Strecke gegenüber dem unteren Ende (35) des Filterelementes (1) nach oben versetzt ist.

6. Filtersystem nach Anspruch 4 oder 5, **dadurch gekennzeichnet, dass** der glockenartige untere Endbereich (27) des Mantels (25) endseits einen Durchmesser besitzt, der zumindest dem doppelten Durchmesser des unteren Endes (35) des Filterelementes (1) entspricht.

7. Filtersystem nach einem der Ansprüche 4 bis 6, **dadurch gekennzeichnet, dass** eine den vom Mantel (25) gebildeten Strömungskanal (29) nach oben fortsetzende Hutze (37) in der Art eines Kaminaufsatzes am oberen Ende des Mantels (25) vorgesehen ist.

8. Filtersystem nach Anspruch 2 oder 3, **dadurch gekennzeichnet, dass** der Mantel (25) durch Wandteile (47, 49, 51) eines Kastens (41, 45) gebildet ist, der einen ein Teil des Fluidanschlusses bildenden Sammelraum (17) enthält, von dem die zumindest eine Anschlussarmatur (13) abzweigt.

9. Filtersystem nach Anspruch 8, **dadurch gekennzeichnet, dass** der Kasten einen im Umriß rechteckförmigen Unterkasten (41) aufweist, längs dessen Seitenränder sich der Sammelraum (17) erstreckt und der eine vom Sammelraum (17) umgebene Öffnung (43) aufweist, über der ein den zumindest einen Strömungskanal (29) für zumindest ein Filterelement (1) bildender Oberkasten (45) angebracht ist.

10. Filtersystem nach Anspruch 9, **dadurch gekennzeichnet, dass** der Oberkasten (45) zumindest eine Seitenwand (47) aufweist, die gegenüber der Hochachse (7) eine Neigung besitzt, die den freien Querschnitt des jeweiligen Strömungskanales (29) nach oben hin verringert.

11. Filtersystem nach Anspruch 10, **dadurch gekennzeichnet, dass** der Oberkasten (45) zwei sich entlang der langen Seiten des Unterkastens (41) nebeneinander erstreckende Schächte aufweist, in deren jedem mehrere Filterelemente (1) in Reihe angeordnet sind, deren Strömungskanäle (29) durch quer zu den Seitenwänden (47) verlaufende Wände (51) getrennt sind.

12. Filtersystem nach einem der Ansprüche 1 bis 11, **dadurch gekennzeichnet, dass** das zumindest eine Filterelement ein Spaltsiebrohrfilterelement (1) ist.

13. Filtereinheit für ein Filtersystem nach Anspruch 12 und zumindest einem der Ansprüche 6 bis 9, wobei das Spaltsiebrohrfilterelement (1) und der mit dessen oberem Ende (31) verbundene glockenartige Mantel (25), vorzugsweise einschließlich der an dessen oberem Ende befindlichen Hutze (37), eine vorgefertigte und bedarfsweise zur Gänze austauschbare Funktionseinheit bilden.

## Claims

1. A filter system comprising at least one filter element (1) which is disposed beneath the surface of a body of water, through which a fluid to be cleaned can flow from its inner fluid space (11) to its outer side, and is surrounded on its outer side by the body of water so that the cleaned fluid is delivered onto the latter, the filter element (1) having a columnar form defining a high axis (7), plunging into the body of water with a substantially vertically extending high axis (7), and being surrounded on its outer side by a cladding (25), **characterised in that** the cladding (25) forms between it and the outer side of the filter element (1) a flow channel (29) for vertical flow of the body of water, that the form of the cladding (25) and its relative position to the outer side of the respective filter element (1) are chosen such that the cladding (25) favours the upwardly directed vertical flow of the body of water within the flow channel (29), and that for this purpose the inner wall of the cladding (25) is spaced apart from the outer side of the filter element (1) by a distance which changes over the length of the high axis (7) in such a way that the free cross-section of the flow channel (29) decreases from a maximum value at the lower inflow end of the flow channel (29) to a minimum value at the upper outflow end.

2. The filter system according to Claim 1, **characterised in that** the at least one filter element (1) is mounted with its lower end (35) on a connection fitting (13) which is connected by a controllable blocking device (14) to a fluid connection (17) delivering the fluid to be cleaned.

3. The filter system according to Claim 2, **characterised in that** a number of connection fittings (13) for the respective elements (1) branch off from the fluid connection (17).

4. The filter system according to any of Claims 1 to 3, **characterised in that** starting from its lower end region (27) which is of a bell-like form based on the bell of a trombone, the cladding (25) extends with substantially conical tapering towards its upper end.

5. The filter system according to Claim 4, **characterised in that** the cladding (25) is suspended with its upper end on the upper end (31) of the respective filter element (1) leaving free a passage for the vertical flow such that the lower end region (27) of the cladding (25) is offset upwards by a length in relation to the lower end (35) of the filter element (1).

6. The filter system according to Claim 4 or 5, **characterised in that** the bell-like lower end region (27) of the cladding (25) has a diameter on the end which corresponds at the very least to twice the diameter of the lower end (35) of the filter element (1).

7. The filter system according to any of Claims 4 to 6, **characterised in that** a hood (37) continuing upwards the flow channel (29) formed by the cladding (25) is provided in the manner of a flue attachment on the upper end of the cladding (25).

8. The filter system according to Claim 2 or 3, **characterised in that** the cladding (25) is formed by wall parts (47, 49, 51) of a box (41, 45) which contains a collecting space (17) forming part of the fluid connection off from which the at least one connection fitting (13) branches.

9. The filter system according to Claim 8, **characterised in that** the box has a lower box (41) with a rectangular outline (41), along the side edges of which the collection space (17) extends and which has an opening (43) surrounded by the collection space (17) over which an upper box (45) forming the at least one flow channel (28) for at least one filter element (1) is attached.

10. The filter system according to Claim 9, **characterised in that** the upper box (45) has at least one side wall (47) which has an incline in relation to the high axis (7) which reduces the free cross-section of the respective flow channel (29) upwardly.

11. The filter system according to Claim 10, **characterised in that** the upper box (45) has two shafts extending next to one another along the long sides of the lower box (41) in each of which a number of filter elements (1) are disposed in a row the flow channels (29) of which are separated by walls (51) extending laterally to the side walls (47).

12. The filter system according to any of Claims 1 to 11, **characterised in that** the at least one filter element is a slotted hole screen pipe filter element (1).

13. A filter unit for a filter system according to Claim 12 and at least one of Claims 6 to 9, the slotted hole screen pipe filter element (1) and the bell-like cladding (25) connected to the upper end (31) of the latter, preferably including the hood (37) located at the upper end of the latter, forming a pre-produced and if so required totally interchangeable functional unit.

## Revendications

1. Système de filtration, comprenant au moins un élément (1) filtrant, qui est disposé en dessous de la surface des eaux, qui peut être traversé par un fluide à épurer de son espace (11) intérieur pour du fluide à son côté extérieur et qui est entouré sur son côté extérieur par les eaux de sorte que le fluide à épurer est cédé à ces eaux, l'élément (1) filtrant ayant une conformation de type en colonne définissant un axe (7) haut, plongeant dans les eaux en ayant l'axe (7) haut s'étendant sensiblement verticalement et étant entouré d'une enveloppe (25) sur son côté extérieur, **caractérisé en ce que** l'enveloppe (25) forme, entre elle et le côté extérieur de l'élément (1) filtrant, un canal (29) d'écoulement pour un écoulement vertical des eaux, **en ce que** la conformation de l'enveloppe (25) et sa relation en position par rapport au côté extérieur de l'élément (1) filtrant respectif sont choisies de manière à ce que l'enveloppe (25) favorise l'écoulement vertical, dirigé vers le haut, des eaux dans le canal (29) d'écoulement et **en ce que** pour cela la paroi intérieure de l'enveloppe (25) soit à une distance du côté extérieur de l'élément (1) filtrant, qui se modifie sur la longueur de l'axe (7) haut, de façon à ce que la section transversale libre du canal (29) d'écoulement diminue d'une valeur très grande à l'extrémité d'entrée inférieure du canal (29) d'écoulement à une valeur très petite à l'extrémité supérieure de sortie.

2. Système filtrant suivant la revendication 1, **caractérisé en ce que** le au moins un élément (1) filtrant est monté par son extrémité (35) inférieure sur un robinet (13) de raccord, qui communique, par un dispositif (14) de fermeture pouvant être commandé, avec un raccord (17) pour du fluide évacuant le fluide à épurer.

3. Système filtrant suivant la revendication 2, **caractérisé en ce que** plusieurs robinets (13) de raccord pour les éléments (1) filtrants respectifs sont en dérivation du raccord (17) pour du fluide.

4. Système filtrant suivant la revendication 1 à 3, **caractérisé en ce que** l'enveloppe (25) s'étend en partant de sa partie (27) d'extrémité inférieure, qui a une forme en cloche, à la manière du cornet d'un trombone vers son extrémité supérieure sensiblement en se rétrécissant coniquement.

5. Système filtrant suivant la revendication 4, **caractérisé en ce que** l'enveloppe (25) est suspendue par son extrémité supérieure à l'extrémité (31) supérieure de l'élément (1) respectif, en laissant libre un passage pour le courant vertical de manière à ce que la partie d'extrémité de l'enveloppe (25) soit décalée vers le haut d'une certaine étendue par rapport à l'extrémité (35) inférieure de l'élément (1) filtrant.

6. Système filtrant suivant la revendication 4 ou 5, **caractérisé en ce que** la partie (27) d'extrémité inférieure en forme de cloche de l'enveloppe (25) a, du côté de l'extrémité, un diamètre qui correspond au moins à deux fois le diamètre de l'extrémité (35) inférieure de l'élément (1) filtrant.

7. Système filtrant suivant l'une des revendications 4 à 6, **caractérisée en ce qu'**un capuchon (37), prolongeant vers le haut le canal (29) d'écoulement formé par l'enveloppe (25), est prévu à la manière d'un chapeau de cheminée à l'extrémité supérieure de l'enveloppe (25).

8. Système filtrant suivant la revendication 2 ou 3, **caractérisée en ce que** le l'enveloppe (25) est formée par des parties (47, 49, 51) de paroi d'un caisson (41, 45) qui comporte un espace (17) collecteur, qui forme une partie du raccord du fluide et dont bifurque le au moins un robinet (13) de raccord.

9. Système filtrant suivant la revendication 8, **caractérisée en ce que** le caisson a un sous-caisson (41), de contour rectangulaire, le long des bords latéraux duquel s'étend l'espace (17) collecteur et qui a une ouverture (43) qui est entourée par l'espace (17) collecteur et par laquelle est ménagé un caisson (45) supérieur formant le au moins un canal (29) d'écoulement pour au moins un élément (1) filtrant.

10. Système filtrant suivant la revendication 9, **caractérisée en ce que** le caisson (45) supérieur à au moins une paroi (47) latérale qui est inclinée par rapport à l'axe (7) haut, l'inclinaison diminuant la section transversale libre du canal (29) d'écoulement respectif en allant vers le haut.

11. Système filtrant suivant la revendication 10, **caractérisée en ce que** le caisson (45) supérieur a deux puits s'étendant côte à côte le long des grands côtés du petit caisson (41), puits dans chacun desquels sont montés en série plusieurs éléments (1) filtrants dont les canaux (29) d'écoulement sont séparés par des parois (51) s'étendant transversalement aux parois (47) latérales.

12. Système filtrant suivant l'une des revendications 1 à 11, **caractérisée en ce que** le au moins un élément filtrant est un élément (1) filtrant tubulaire à barreaux à faible interstice.

13. Groupe de filtration pour un système de filtration suivant la revendication 12 et au moins l'une des revendications 6 à 9, dans lequel l'élément (1) filtrant tubulaire à barreaux de faible interstice et l'enveloppe (25) en forme de cloche reliée à son extrémité (31) supérieure, y compris de préférence le capuchon (37) se trouvant à son extrémité supérieure, forment un groupe fonctionnel préfabriqué et pouvant être remplacé en cas de besoin dans son entier.
